# EUROPEAN PATENT APPLICATION

(11) **EP 4 640 601 A1**
(43) Date of publication of application: **29.10.2025**
(21) Application number: 24172449.1
(22) Date of filing: 25.04.2024
(51) Int. Cl.: B65G 61/00, B65G 59/04, B65G 47/91

(54) **APPARATUS FOR HANDLING LAYERS OF PALLETIZED GOODS**

(71) Applicant: Körber Suppy Chain DK A/S, 9510 Arden (DK)
(72) Inventor: Kristensen, Jan, 9510 Arden (DK)
(74) Representative: Chas. Hude A/S

(57) **Abstract**

The invention relates to an apparatus for handling layers of palletized goods. The apparatus includes a lift head with a suction face which is adapted in size for a pallet and comprises a downwardly open suction chamber which is connected via individual one-way valves and at least one pipe to at least one suction device providing a suction flow with a volumetric flow rate at the suction face. The volumetric flow rate from said at least one suction device is adjustable and arranged for rapidly adjusting the volumetric flow rate from a first value to a second value. The invention also relates to a method for operating an apparatus for handling layers of palletized goods.

## Description

### Technical Field

The present invention relates to an apparatus for handling layers of palletized goods, where the suction flow can be adjusted to ensure the right handling outcomes.

### Background

In order to make effective, cheap and simplified distribution of goods, most goods are sold on pallets. However, a widespread need has appeared for also dispatching orders comprising lesser amounts of goods in a correspondingly effective way. Statistically it appears that many orders for small shops actually consist of consignments of goods most often consisting of very few layers or maybe just a single layer of palletised goods and/or loads. Goods and loads can be defined as multiple layers of goods.

Known lifting devices and an item holder using relatively complicated lifting or holding faces consist of a large number of lesser chambers that are open toward the lifting face and the holding face, respectively. For lifting or holding of e.g. plate-shaped items with different outer shape or size in the printing industry it is known to use lifting or holding faces with a differentiated vacuum chamber system, i.e. with a number of uniform, but individually connected chambers which, by means of a valve system, may be connected with one or more vacuum sources in such a way that sheets or plates with individual shapes or sizes may be lifted or held fast with one and the same lifting or holding face.

Several apparatuses for handling layers of palletised goods are known, the apparatuses normally comprising a vertically displaceable lift head with a horizontal suction face which is adapted in size to a pallet and horizontal suction face consisting of a large number of downwards open suction chambers. The suction face is arranged to be moved downwards against the top side of an upper layer of individually or group-wise packed goods on a pallet, where the suction chambers are connected via individual valves with a source of vacuum incorporated in the lift head, and where the apparatuses are intended for interacting with depalletizing systems. The valves between the suction chambers and the source of vacuum are designed as ball valves with very light thin-walled valve bodies which are enclosed in the suction chamber by means of lateral projections or by means of a retainer net and which interact with upper round valve openings with spherical valve seats at the bottom if the actual suction chamber is not closed at the bottom by contacting the top side of the goods in an upper pallet layer. In connection with each valve, there are arresting means adapted to prevent the valve balls from shutting off the valves, such that it is ensured thereby that the shutoff valves of the suction face can be forcibly opened, when there is a contact to the goods in the pallet layer, and can be forcibly opened, when there are gaps or openings in the pallet layer. The descriptions of these previous inventions are hereby incorporated in the present application by reference.

In connection with the hitherto common handling of layers of palletised goods, it is known to work with rectilinear lifting and moving of pallet layers, i.e. moving pallet layers mutually between positions on mutually perpendicular pallet ways. Experiments have been made using robot technology for moving palletised layers of goods by means of current suction heads. However, the use of robots results in an entirely different movement pattern which also includes swinging movements of suction heads thus imposing significantly greater demands on the suction ability in order to hold the relatively heavy and possibly open pallet layer in a secure way during swinging movements, where centrifugal force actions occur.

Consequently, the known apparatuses for handling layers of palletized goods by means of suction and vacuum are still facing trouble in lifting layers of goods from a pallet, if the layers are e.g. incomplete, and there are gaps, or missing one or more parcels of goods in the layer, leaving empty spaces in the layer. Empty spaces in a layer may also be the cause of the apparatus also mistakenly lifting the underlying layer. Moreover, in some cases the goods may appear to be to heavy or packed in a way such that the apparatus drops the goods during lifting.

### Disclosure of the Invention

The object of the present invention is to provide a new and improved apparatus for handling layers of palletized goods, which apparatus handles layers of palletised goods thus enabling achieving greater certainty by unloading layer by layer or layers by layers of individual articles or goods from a pallet, that is even if the individual pallet layers include gaps between the articles or include articles that are film-covered in such a way that openings in the pallet layer are formed upwards

In a further aspect, the invention also provides an apparatus for handling layers of palletized goods where the lifting capacity can be adjusted dynamically and rapidly and even during a lift.

The object of the invention is also to improve that the lift by an apparatus for handling layers of palletized goods gets safely lifted by the lift head in transit vertically and/or horizontally. Another aspect of the invention is to ensure that the right pressure and volumetric flow rate are upheld within the lifting head to avoid drop of the handled goods.

In an aspect, the present invention relates to an apparatus for handling layers of palletized goods, said apparatus including a lift head with a suction face which is adapted in size for a pallet and comprises a downwardly open suction chamber which is connected via individual one-way valves and at least one pipe to at least one suction device providing a suction flow with a volumetric flow rate at the suction face, wherein the volumetric flow rate from said at least one suction device is adjustable and arranged for rapidly adjusting the volumetric flow rate from a first value to a second value.

The lift head includes a suction face which may be planar and substantially horizontal, but the suction face may also have other shapes than planar and may e.g. be inclined. The suction face serves to provide a suction flow which can pick up a layer of palletized goods by means of suction flow providing a volumetric flow rate.

The one-way valves are basically a tube, wherein a ball can move and close and open at the top of the tube. The type of one-way valves is described in further details in e.g. EP2051920B1, in which document the valves are referred to as "ball valves". However, other types of valves, such as e.g. electric or mechanical valves can be used.

In the apparatus according to the invention the at least one pipe includes at least one control valve, preferably the one or more control valves are connected with and controlled by a control device. The control valve is different from the one-way valves described above, i.e. the on-way valves are mounted in connection with the suction face, while the control valve is mounted in the pipe between the suction device and the suction chamber. The control valve can be adjusted to allow the full suction power from the suction device or only part of the suction power to reach the suction chamber. The control valve may also cut off all suction power from the suction device to the suction chamber.

The control valve may be manually operated or operated by a control device such as a computer, PLC and/or micro controller.

The apparatus can also operate by grabbing a targeted layer and/or layers of goods, utilizing the bellows to clamp and/or seal the goods. The lift head is activated by means of a volumetric flow rate with a first value to a predetermined distance, activated by either fixed distance, such as approx. 100 mm, above the layer below and/ or a sensor activation. If the layer/or layers are free for lift or predetermined distance is achieved, the volumetric flow rate is adjusted to a second value, preferably by increasing the volumetric flow rate, before the final lift is performed, ensuring the right pressure to secure the layer against the suction face without grabbing any layers and/or goods below the targeted layer.

In an aspect of the invention, when performing a lift, the lift head on the apparatus grabs a layer and/or layers of palletized goods and lifts it by means of the volumetric flow rate applied by the suction device, e.g. by opening a valve in a valve connecting the suction device and the lift head. When the lift is initiated, a sensor registers that the lift is correct and if the lift is correct, the lift continues. In case there is a chance that the lift is not correct, e.g. the lift head is about to drop the layer due to pressure loss, the volumetric flow rate is adjusted by increasing a stronger pressure by means of the two, or more, suction devices to equalize the pressure loss.

The system utilizes the first and second volumetric flow rates to serve as a redundancy method to uphold the right hold of the loaded goods during transit.

Each suction device is a device which is capable of providing suction flow and vacuum-like environment at the suction face, by creating a suction flow velocity in the air, such that a volumetric flow rate is provided

The term "rapidly adjusting the volumetric flow rate" means that the volumetric flow rate can be changed with at least 0.25 m³/min within no more than 5000 ms, preferably within no more than 1000 ms.

Thus, in an embodiment of the apparatus, the volumetric flow rate is adjusted from a first value to a second value in a period of time less than 5000 ms, such as less than 1000 ms, preferably in less than 500 ms.

The suction device provides a suction flow velocity of the air which also serves to provide the volumetric flow rate, i.e. volume of air moved per time unit. In an embodiment, the volumetric flow rate can be adjusted between 0.1 m³/min to 130 m³/min, preferably between 0.1 m³/min to 100 m³/min, more preferably between 0.1 m³/min to 50 m³/min, thus it is possible to adjust the volumetric flow rate within a proper range.

According to the invention, the apparatus comprises at least one suction device, such as at least one suction pump, preferably selected from centrifugal pumps, membrane pumps, fan pumps and vacuum pumps. In embodiments, the apparatus comprises at least two suctions pumps, which may facilitate the rapid change of the volumetric flow rate and/or vacuum levels. To obtain a satisfactory volumetric flow rate, the rated speed of the suction device is in a range between 20 m³/min to 100 m³/min.

In an embodiment, the apparatus comprises at least two suction devices, and the lift head is connected to one pipe that at is connected the opposite end with at least two pipes each being connected with one of the at least two suction devices. The apparatus may e.g. comprise two suction devices, the first suction device and the second, where the lift head is connected to one pipe, the main pipe, which is connected to two pipes, the first and second pipes. The first pipe is connected to the first suction device, and the second pipe is connected to the second suction device, and in this constellation the first suction device may serve as a main suction device, and the second suction device may serve as an auxiliary suction device, and control valves may be located in the second pipe and the main pipe or in the first pipe and the second pipe, or in the first pipe and the second pipe and the main pipe. The second pipe and the auxiliary suction device may be added to an existing or known type of apparatus for handling layers of palletized goods to obtain an apparatus according to the invention.

When the first suction device serves as the main suction device, it delivers the basic volumetric flow rate to the lift head, and the second auxiliary suction device may serve to increase the volumetric flow rate, when additional suction force is required to ensure no pressure loss of the vacuum, e.g. dropped goods if the pressure if too low to ensure vacuum. The auxiliary suction device may also serve to facilitate a rapid adjustment of the volumetric flow rate when required. In embodiments, the main suction device is more powerful or runs with more power than the auxiliary suction device. This may have an advantage in respect of energy consumption and adjusting the volumetric flow rate. The adjustment may e.g. be performed by opening and closing the control valves in the pipes.

To the abovementioned embodiment, the main and auxiliary suction devices are assignable by design choices.

In an embodiment of the apparatus, the apparatus comprises at least two suction devices, and the lift head is connected to the suction devices by at least two pipes that are connected at one end with the lift head and in the opposite end, each pipe is connected with one of the at least two suction devices. If the apparatus comprises two suction devices, the first suction device and the second suction device, each suction device is connected to the lift head by a pipe, i.e. the first suction device is connected to the lift head by a first pipe and the second suction device is connected to the lift head by a second pipe. The first pipe and the second pipe each comprises a control valve to control the volumetric flow rate in the lift head. The first suction device and the first pipe may be used to deliver the basic volumetric flow rate to the lift head, and the second suction device may function as an auxiliary supplier of volumetric flow rate in particular if the volumetric flow rate needs to be increased to improve a lift by the lift head. The volumetric flow rate can be adjusted by changing the position of the control valves in the pipes.

The invention also includes an embodiment where the apparatus comprises one suction device and the lift head is connected to the suction devices by one main pipe that is connected at one end with the lift head and at the opposite end with the suction device, and wherein the suction device is connected with normal air pressure via a second pipe and a control valve. The second pipe may be connected with the suction device by connecting to the main pipe. The volumetric flow rate can then be adjusted by the control valve in the second pipe, i.e. if the control valve is closed, the volumetric flow rate is maximized. Preferably, the main pipe also includes a control valve to control the volumetric flow rate.

In an embodiment of the apparatus, the lift head comprises bellows to hold/grip the goods and/or in combination with the goods seal the suction chamber, whereas the bellows can either be inflatable, mechanical and/or electrically enhanced. The bellows may serve to improve the lift by the lift head and facilitate the hover effect created by the volumetric flow rate. In embodiments, the hover effect alone is capable of providing the lifting capacity, e.g. by providing a sufficient volumetric flow rate to the lift head.

The apparatus according to the invention is capable of lifting layers on a pallet with great security and without dropping packets from the layer due to the fact that the apparatus can adjust the volumetric flow rate rapidly, thereby obtaining the required volumetric flow rate to perform a correct lift. The aspect ensures high stability for the production flow without grabbing from layers below the targeted layer and/or layers.

In yet an aspect the invention relates to a method for operating an apparatus for handling layers of palletized goods, said apparatus includes a lift head with a suction face which is adapted in size for a pallet and comprises a downwardly open suction chamber which is connected via individual one-way valves to at least one suction device providing a suction flow with a volumetric flow rate providing an upward suction force below the suction face, said method comprising the steps of:
- providing a suction flow with a volumetric flow rate to the suction face;
- allowing the lift head to grab and hold the layer of goods;
- checking if the hold is correct;
wherein the method comprises the further step
- if the hold is incorrect, rapidly adjusting the volumetric flow rate from a first value to a second value, to obtain a correct hold of the layer.

The method makes use of an apparatus as described above, and when a lift is performed by applying suction flow to a layer of palletized goods, it is checked whether the lift appears correct. The lift can be checked manually, and the lift and/or can also be checked by means of cameras, sensors, and similar means, and data sent to a controller which will determine if the lift is correct or incorrect. If the lift is correct, the lift will be continued, but if the lift is incorrect, e.g. pieces of goods are about to fall down from the lift head, the volumetric flow rate is rapidly changed to obtain a better and correct hold whereafter the lift is continued. On the other hand, if some goods in the palletized goods are lifted unintentionally because the volumetric flow rate is to high, the volumetric flow rate can be rapidly reduced and adjusted to obtain the correct lift.

By using the method, it is possible to reduce or even prevent lifts where the lift head drops goods from a layer of palletized goods during a lift. Another aspect of this method, is to ensure that lift only affects the targeted layer and/or layers and does not affect the layers below.

The invention relates to method for operating an apparatus for handling layers of palletized goods comprising at least an upper layer and a lower layer, said apparatus including a lift head with a suction face which is adapted in size for a pallet and comprises a downwardly open suction chamber which is connected via individual one-way valves to at least one suction device providing a suction flow with a volumetric flow rate providing an upward suction force below the suction face, said method comprising the steps of:
- providing a suction flow with a volumetric flow rate to the suction face;
- allowing the lift head to grab the upper layer of goods and hold the layer;
- lifting the layer of goods, until cleared from below by a sensor and/or a predetermined distance above the lower layer;
- holding the layer of goods in the predetermined position above the lower layer and adjusting the volumetric flow rate from a first value to a second value; and lifting the layer of goods to a desired position.

In respect of the layers of palletized goods comprising at least an upper layer and a lower layer, this should be understood as that the palletized goods may comprise two of more layers, and that the layer, which is intended to be lifted, is the upper layer, and that the one or more layers below constitute the lower layer.

When the upper layer is grabbed and lifted a predetermined distance, such as a distance between 25 mm and 200 mm, preferably between 50 mm and 150 mm such as about 100 mm, above the lower layer, i.e. in this context the layer just below the upper layer by means of a volumetric flow rate with a first value, the value of the volumetric flow will be adjusted, preferably increased, but in some cases decreased, to a second value. The adjusted value of the volumetric flow rate helps to improve the lift of the layer to the desired position, e.g. on another pallet or wagon without lifting the boxes below the targeted layer.

In an embodiment, the method ,in case of one or more cavities are present in the layer to be lifted, comprises the further step of increasing the volumetric flow rate from a first value to a second value to ensure that targeted one-way valves over the one or more cavities are closed. This method entails that layers with cavities, e.g. voids or holes, are closed off properly by enforcing the right pressure on only the targeted one-way valves (e.g. ball valves, mechanical valves) to ensure the right close within the suction face (e.g. suction sole).

By utilizing this method, the larger cavities or air gaps within the desired layers are securely closed off by applying the right amount of pressure.

Normal volumetric air flow rate achieved by a single suction device is not always sufficient causing that a proper closing of the one-way valves is not achieved which may affect the lift negatively. Therefore, use of a second or auxiliary suction device may be beneficial and serve to improve the lift.

By increasing the volumetric flow rate from a first value to a second value, e.g. by connecting a suction device to provide an additional volumetric flow rate, the increased flow rate is able to ensure that all one-way valves over the cavities are closed in a more secure manner than if only the volumetric flow rate with the first value is applied.

Consequently, in an embodiment of the method, the method comprises the steps of:
- placing the lift head over a layer of palletized goods;
- providing a volumetric flow rate to the suction face;
- allowing the lift head to lift the layer of palletized goods;
- checking the lift is correct;
wherein the method comprises the further steps
- a. if the lift is deemed correct;
- lifting the layer of palletized goods to the desired position;
- b. if the lift is incorrect
- adjusting the volumetric flow rate from a first value to a second value, to obtain a correct lift;
- lifting the layer of palletized goods to the desired position.

To facilitate the lifting process, the method in an embodiment comprises the further steps of:
- monitoring the lift head by means of sensors or monitors and a control device to determine if a lift is correct or incorrect;
and in case of an incorrect lift;
- sending a signal from the control device to the suction device instructing to;
- adjust the volumetric flow rate from a first value to a second value, until the control system registers that a correct lift is obtained.

In the method, the apparatus can be monitored by one or more sensors, and preferably the one or more sensors are communicating with a control device, e.g. a computer which is programmed to check if a lift by the apparatus for handling layers of palletized goods is correct.

Although several types of sensors can be used to monitor the lifting process, in an embodiment the one or more sensors are selected from a time of flight sensor, a light barrier sensor, a diffusion sensor, a radar, an ultra-sonic sensor, a camera or the monitoring of the electric circuits and/or power consumption. The sensors can also determine a distance between the layer to be lifted and the upper surface of the layer below the layer to be lifted if desired

In the abovementioned sensor embodiment of power consumption, the total power consumption reveals the yield of the flow of the volumetric flow rates which entails a high level of probability if the lift was successful or not.

In case the monitor and control device find that at lift by the apparatus for handling layers of palletized goods is not correct, the control device will send instructions to the apparatus to correct the lift by adjusting the volumetric flow, and in an embodiment of the method one or more control valves are used for adjusting the volumetric flow rate from a first value to a second value, and preferably the one or more control valves are operated and controlled by a control device.

The monitor may e.g. register that the lift head is about to drop the layer of goods which it was intended to lift, or the monitor may register that the lift actually lifts the layer intended to be lifted and also the layer or part of the below layer which was not intended to be lifted. In both cases, the information is delivered to the control device which will instruct the apparatus to adjust volumetric flow rate in the lift head.

Consequently, according to the method the volumetric flow rate is adjusted from a first value to a second value, and if the lift head is about to drop the layer of goods, and preferably the volumetric flow is increased.

Accordingly, the volumetric flow rate is adjusted from a first value to a second value, and if the lift head lifts goods from a layer below the layer to be lifted, preferably the volumetric flow is decreased.

The adaption of volumetric flow should appear rapidly and preferably in a period of time less than 5000 ms, such as less than 1000 ms, preferably in less than 500 ms

In an embodiment of the method according to the invention, the apparatus includes a first suction device and a second suction device, and where the first suction device is adapted for providing a suction flow with a volumetric flow rate to the suction face, and where the second suction device is adapted for increasing the volumetric flow rate at the suction face during a lift. The first and the second suction devices are connected to the lift head by means of pipes, and preferably the pipes are equipped with control valves to control the volumetric flow provided by the suction devices. Thus, the control valves can serve to increase or decrease the volumetric flow and thereby control the lift.

To improve the lifting properties, the method in an embodiment comprises the further step of inflating inflatable bellows on the lift head so the bellows contact the rim of the layer of goods. Thereby, the bellows may serve to seal the suction chamber together with the layer of goods and facilitate the lifting of the goods as they will serve to concentrate the volumetric flow rate and make it easier for the volumetric flow rate to lift the layer of goods.

As the bellows, when inflated and sealing the circumference around the layer of goods, serve to facilitate the lift, the bellows are frequently used in the lifting operation. Where the bellows create a sealing, the goods are pushed towards the center point of the layer, reducing gaps in the target layer by the centering.

However, the method according to the invention is also capable of providing a hover effect for lifting layers of goods from a pallet without use of bellows. The hover effect is established by increasing the volumetric flow rate, and it has appeared that the use of an additional suction device to support a main suction device is particularly suitable for increasing the volumetric flow rate.

The invention provides a solution for handling palletized goods in lifting operation, where it is possible to vary the suction flow and the volumetric flow rates during a lift which has appeared to improve the lifting properties. The solution with using two or more suction devices has appeared to be particularly suitable and provides a better lifting effect than expected. The solution also opens up for the possibility that energy consumption can be reduced, as the use of two devices gives an increase in the volumetric flow rate rather than the pressure, and this effect appears to provide an improved lift with less energy consumption.

### Brief Description of the Drawings

The invention is explained in detail below with reference to the drawings, in which
Fig. 1 shows a prior art apparatus for handling palletized layers;
Fig. 2 shows a pallet with layer of packages;
Fig. 3 shows a pallet with a cavity in the layers of packages;
Fig. 4 shows an apparatus for handling palletized layers according to the invention;
Fig. 5 shows an apparatus for handling palletized layers according to the invention;
Figs. 6a and 6b illustrate a lift;
Figs. 7a and 7b illustrate a lift in a layer with cavities;
Figs. 8a and 8b illustrate the lifting process;
Fig. 9 shows special packages;
Figs. 10a and 10b show a lift of the special packages.

The figures are only intended to show the principles of the invention and may not be accurate. Details which do not form part of the invention may be omitted. Generally, the same reference numbers are used for the same parts in the figures.

### Detailed description of the Invention

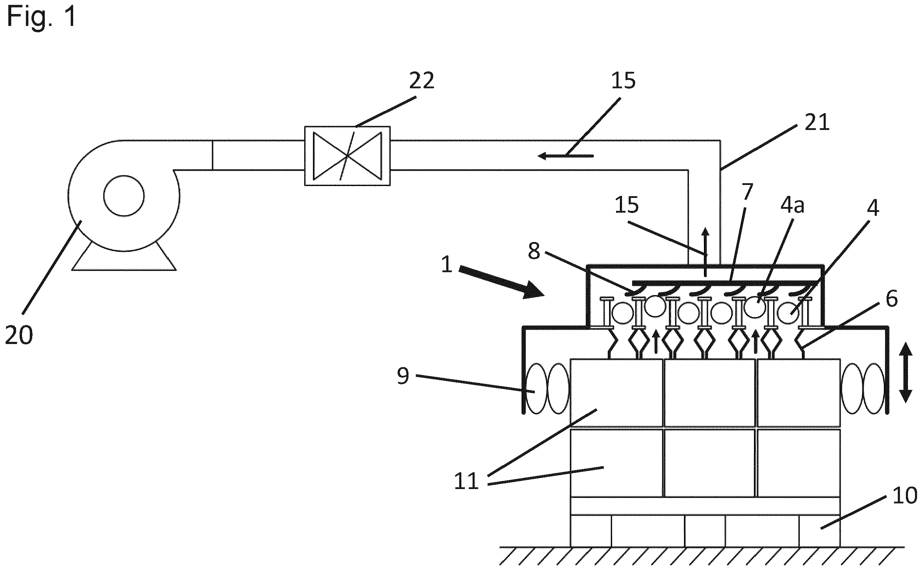

Fig. 1 illustrates a prior art apparatus 1 for handling palletized layers of goods, where the layers 11 with boxes 12 are placed on a pallet 10 located below the lift head 2 and in the vicinity of the suction chamber 3. A part of the interior of the lift head 2 is shown in the figure with a row of one-way valves 4 between a sealing 6 and a slidable device 7 with springs 8. The slidable device 7 is used to control the balls 5 in the one-way valves 4 (as described in the document EP2051920B1). The balls 5 in the one-way valves 4 may close the suction flow through the one-way valve 4a if desired, e.g. if a cavity is located below the one-way valve 4a. In cases where this is not desired, a spring 8 on the slidable device may prevent the closing of the one-way valve 4.

In the suction chamber 3 of the lift head 2, bellows 9 are inflated to form a rim around the layer 11 of boxes 12 to seal the suction chamber 3.

The lift head 2 is connected with a suction device 20 via a pipe 21 and a control valve 22, such that the suction device 20 depending on the position of the control valve 22 can provide a suction flow with a volumetric flow rate to the suction chamber 3 of the lift head 2 to lift the layer 11 of boxes 12. The suction flow from the suction device 20 is substantially constant, while the suction flow in the suction chamber 3 may vary depending on the position of the control valve 22. The arrows 15 indicate the direction of the suction flow.

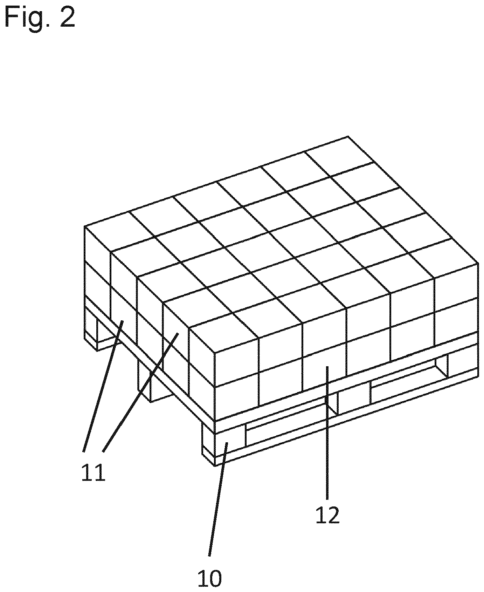

Fig. 2 illustrates a pallet with two layers 11 of boxes 12 which may be ordinary cardboard boxes.

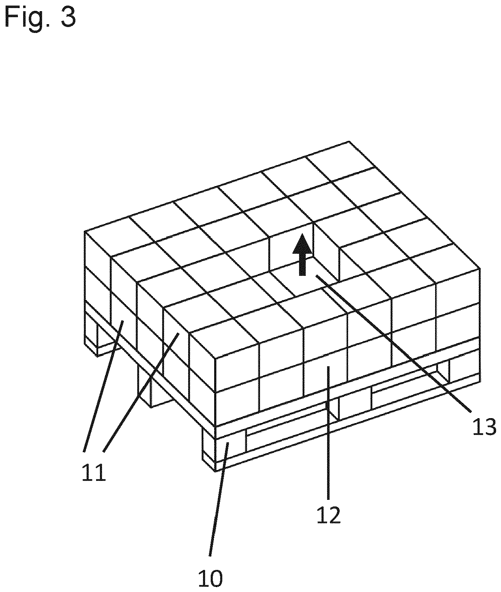

Fig. 3 illustrates a pallet 10 with two layers 11 of boxes 12, where the upper layer has a cavity 13, where four boxes are missing.

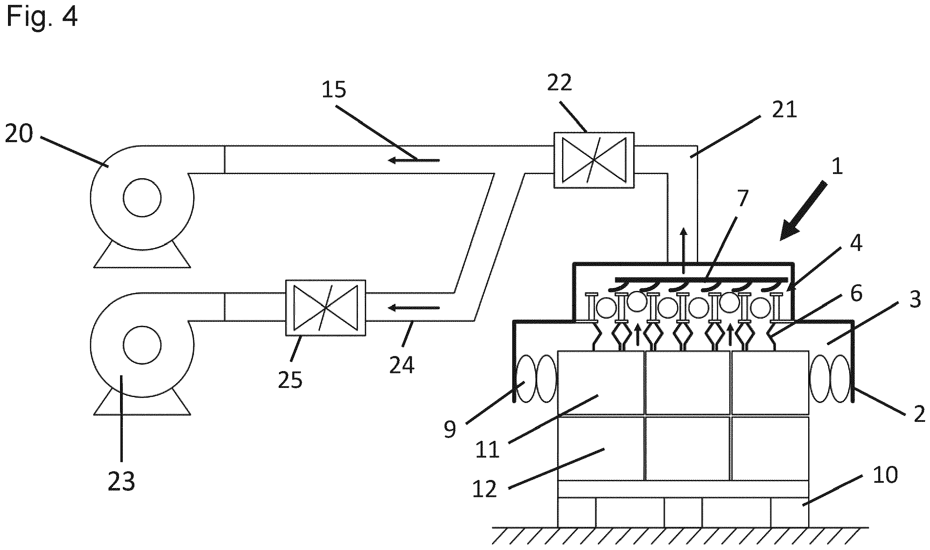

Fig. 4 illustrates an apparatus 1 for handling palletized layers according to the invention. In this embodiment, the lift head 2 of the apparatus 1 corresponds to the lift head of the prior art apparatus. The lift head 2 is also connected with a suction device 20 via a pipe 21 and a control valve 22. However, between the suction device 20 and the control valve 22, a second pipe 24 is connected with the pipe 21, and at the opposite end the second pipe 24 is connected with a second suction device 23. Moreover, the second pipe 24 also includes a second control valve 25.

During operation, when the apparatus 1 may start operating like a prior art apparatus, the lift head 2 including sealing 6, one-way valves 4, and slidable device 7 are lowered down over the layer 11 on the pallet 10, and the bellows 9 may be inflated to facilitate the lift.

However, in this embodiment, the suction device 20 and the second suction device 23 are running to provide a suction flow. In the beginning of the lift, the second control valve 25 is closed, and control valve 22 is open such that via the pipe 21, the suction device 20 can provide a suction flow and volumetric flow rate to the suction chamber 3.

The apparatus according to the invention may function as follows. When the lift is started, and the upper layer 11 on the pallet 12 has been lifted, it is ascertained, e.g. by use of suitable sensors, that the layer 11 or one or more boxes 12 in the layer 11 are about to drop down. When this appears, the second control valve 25 is opened and the second suction device 23 can provide an increased suction flow and volumetric flow rate to the suction chamber 3 via the second pipe 24 and the pipe 21, such that the layer 11 is kept in correct position during a lift.

The apparatus may also function in an alternative manner. When the lift is initiated, and it is ascertained that the suction flow and volumetric rate are too high and there is a risk that the lift head 2 will also lift boxes 12 from the second layer of boxes, which are not intended to be lifted, i.e. from the layer below the layer which the lift head 2 is intended to lift. In this case, the second control valve 25 is closed, and the control valve 22 may be partly closed to regulate the suction flow and volumetric flow rate in the suction chamber 3, such that the lift is carried out as desired.

To ascertain that a lift is correct, a number of sensor may be used, e.g. cameras, laser sensors, or light barrier sensors. The information from the sensors are processed in a computer which is programmed to assess the lift performed by the lift head.

In the apparatus described in fig. 4, the pipe 21 is connected to the lift head, and the second pipe 24 is connected to the pipe 21. This design can be used to modify an existing prior art apparatus as described in fig. 1. Thus, it is possible to practise the invention in a cost-effective manner. In an alternative solution, the pipe 21 and the second pipe 24 may both be connected with the lift head, and each pipe 21 and 24 should include a control valve 22 and 25.

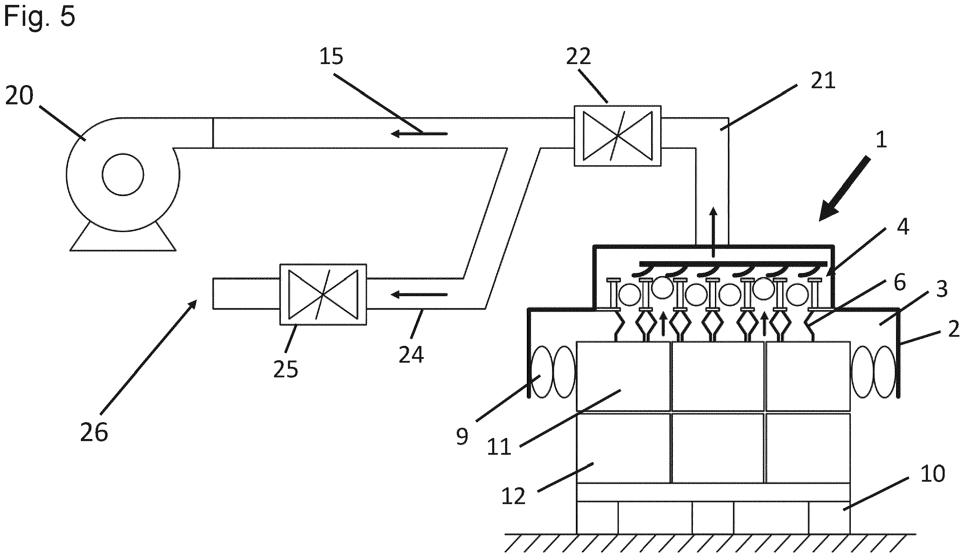

Fig. 5 illustrates an embodiment, where only one suction device 20 is used. The suction device 20 is connected to the lift head 2 by means of the pipe 21 which includes a control valve 22 to control the suction flow from the suction device 20. Between the suction device 20 and the control valve 22, a second pipe 24 is connected to the pipe 21. At the opposite end, the second pipe 24 has an opening to ambient 26 and is in this manner connected with ambient. The second pipe 24 includes a second control valve 25.

In this constellation, the suction device 20 is able to provide a relatively high suction flow and actually a higher suction flow than needed in most cases. When a lift is initiated by the lift head 2, and it appears that the suction flow and volumetric flow rate in the suction chamber 3 are too high, the suction flow and volumetric flow rate can be reduced to an appropriate level by opening the second control valve 25 in the second pipe 24, whereby a part of the suction flow and volumetric flow rate is mixed up with air from ambient resulting in reduction of the total suction flow, and volumetric flow rate in the suction chamber 3 is reduced. It is possible to reduce the suction flow and volumetric flow rate in the suction chamber 3 almost instantly by opening the second control valve 25 thus providing access to ambient.

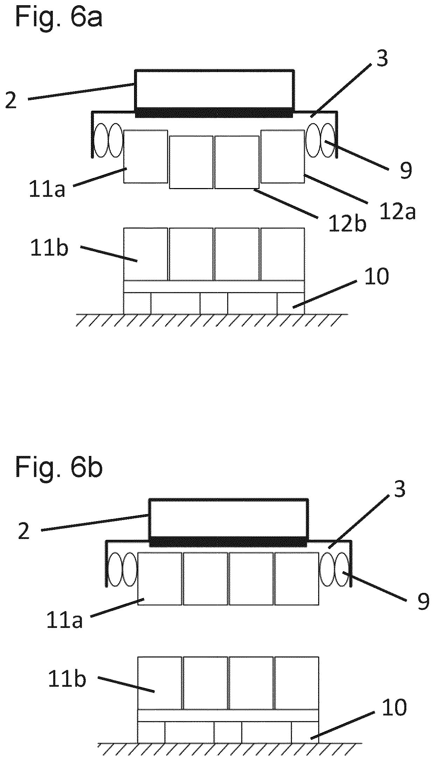

Figs. 6a and 6b illustrate a lift, where the initial lift is seen in fig. 6a. As it can be seen, the pallet 10 has carried two layers 11a and 11b of boxes 12, and the lift head 2 has initiated a lift of the layer 11a, but the boxes 12 b are sliding down because the suction flow and volumetric flow rate in the suction chamber 3 is not sufficient to carry out the lift.

In fig. 6b, the situation has been corrected by rapidly increasing the flow rate and volumetric flow rate in the suction chamber 3 as explained in fig. 4 or fig 5. In fig. 6b, the layer 11a is held correctly by the lift head 2.

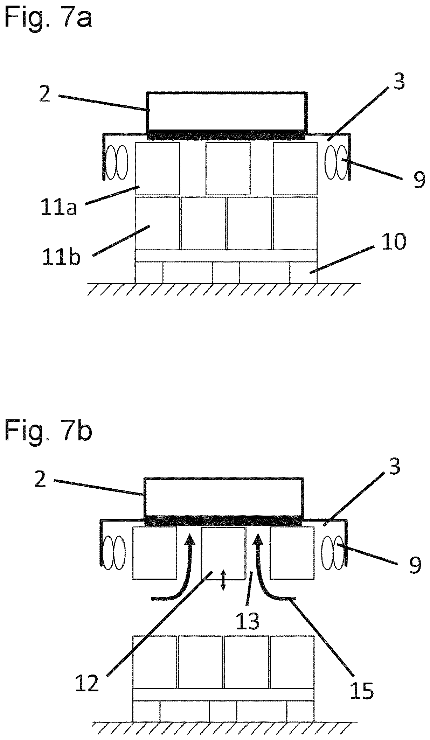

Figs. 7a and 7b show a situation, where the upper layer 11a on the pallet 10 has cavities between the boxes 12. In this lift, the bellows 9 are not activated, and the layer 11a is lifted solely by the suction flow in the suction chamber 3. When it is found that there are cavities between the boxes 12, the apparatus increases the suction flow and volumetric flow rate in the suction chamber 3, e.g. by adding suction flow from a second suction device such that the total suction flow and volumetric flow rate are increased so a hover effect is established in the suction chamber. The flow creating the hover effect is a strong upward air flow as indicated by arrows 15 in the cavities 13, and the suction flow and volumetric flow rate in the suction head 3 are strong enough to hold the boxes 12 of the first layer 11a in a lift.

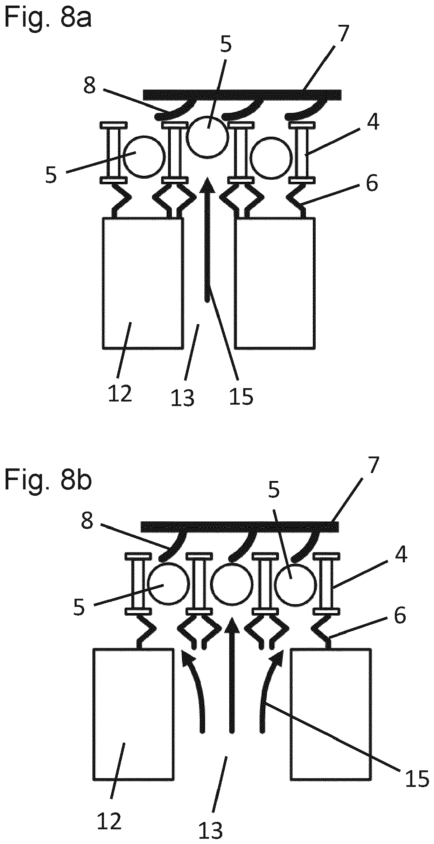

Figs. 8a and 8b illustrate how the hover effect can be obtained with "forced vacuum". In fig. 8a the one-way valves 4 are in the normal mode, where the one-way valves over the boxes are open and the one-way valve over the cavity 13 is closed, i.e. the ball 5 is in the top position closing the one-way valve. This solution will normally prevent that boxes from the layer below the layer intended to be lifted unintentionally are lifted.

Fig. 8b shows how "forced vacuum" is provided. In the lift head, the slidable device 7 is slid such that the springs 8 forces down the balls 5 in the one-way valves 4 such that one-way valves over cavities 13 remain open for suction flow which will facilitate the lift head establishing the hover state. When all the one-way valves are open and extra suction power, e.g. from a second suction device, is provided, a strong power for lifting can be established.

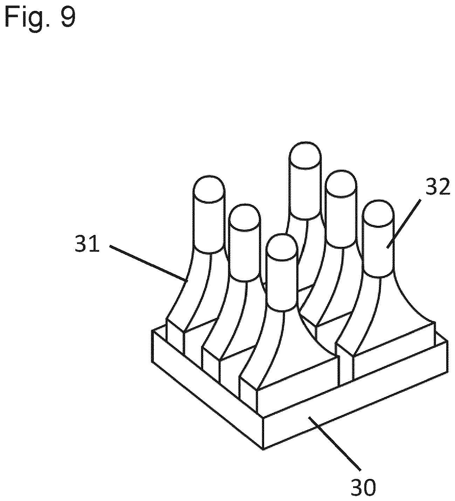

Fig. 9 shows a tray 30 with packaging 31 with a tapered top 32, e.g. bottles for household liquids. Due to the tapered top 32, the packaging 31 has a relative small upper surface with which the suction flow can inter act. This can make it difficult to lift the packaging with a suction flow. Even if the trays and packaging are wrapped in foil, the lift can be complicated.

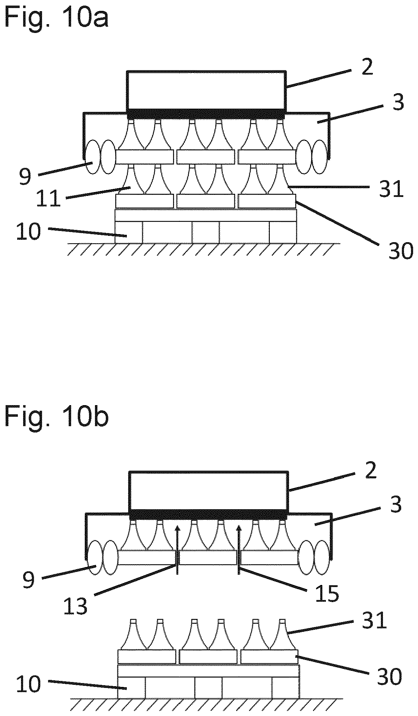

Figs. 10a and 10b illustrate how trays 30 with packaging 31 as described in fig. 9 can be lifted from a pallet 10 with an apparatus according to the invention. The bellows 9 in the lift head 2 are inflated and forming a sealing around the layer of trays 30

In fig. 10a, the lift head 2 is lowered down on the upper layer 11 of trays 30 with packaging 31 and the bellows 9 which have been inflated to seal and hold the trays 30 and serve to improve the lifting properties of the lifting head 2. In this phase of the lifting operation, the control valve to the suction device and the control valve to the second suction device are closed. The control valves and the suction devices are not shown in fig. 10.

When the lift is initiated, both the control valve to the suction device and the second suction device are opened while the one-way valves are kept in the "forced vacuum" mode to ensure a high suction flow and volumetric flow rate, so a correct lift can be performed as illustrated in fig. 10b.

The trays 30 with the packaging 31 are not only held by suction force, but also by the pressure in the surrounding air pressing the trays 30 with the packaging 31 towards the lift head 2 and the suction chamber. This is due to the fact that the second suction device serves to ensure that the suction chamber 3 is evacuated much faster than the surrounding air can pass through and fill the small cavities between the trays 30. The inflated bellows, which seal the circumference, also serve to improve the process during the lift.

Although, the invention has been described with a few examples above, it is clear that a skilled person will be able to practice the invention in many other ways, e.g. by using three or more suction devices as indicated in the claims below. Also the lift head may be constructed differently than described above.

### List of references

- 1: apparatus for handling palletized layers of goods
- 2: lift head
- 3: suction chamber
- 4: one-way valves
- 5: balls
- 6: sealing
- 7: slidable device
- 8: springs
- 9: bellows
- 10: pallet
- 11: layers
- 12: boxes
- 13: cavity
- 15: arrows indicating direction of suction flow
- 20: suction device
- 21: pipe
- 22: control valve
- 23: second suction device
- 24: second pipe
- 25: second control valve
- 26: connection with ambient
- 30: tray
- 31: packaging
- 32: tapered top

## Claims

1. An apparatus for handling layers of palletized goods, said apparatus including a lift head with a suction face for a pallet and comprises a downwardly open suction chamber which is connected via individual one-way valves and at least one pipe to at least one suction device providing a suction flow with a volumetric flow rate at the suction face, wherein the volumetric flow rate from said at least one suction device is adjustable and arranged for adjusting the volumetric flow rate from a first value to a second value.

2. An apparatus according to claim 1, wherein the second volumetric flow rate value is higher than the first volumetric flow rate value, and/or the volumetric flow rate is adjusted from a first value to a second value in a period of time less than 5000 ms, such as less than 1000 ms, preferably in less than 500 ms.

3. An apparatus according to claim 1 or 2, wherein the volumetric flow rate can be adjusted between 0.1 m³/min to 130 m³/min, preferably between 0.1 m³/min to 100 m³/min, more preferably between 0.1 m³/min to 50 m³/min.

4. An apparatus according to claims 1 to 3, wherein the apparatus comprises at least one suction device, such as at least two suction pumps, preferably selected from centrifugal pumps, membrane pumps, fan pumps and vacuum pumps, wherein the rated speed of the suction device is in a range between 20 m³/min to 100 m³/min.

5. An apparatus according to any of the preceding claims, wherein the apparatus comprises at least two suction devices and the lift head is connected to one pipe that is connected at the opposite end with at least two pipes each being connected with one of the at least two suction devices.

6. An apparatus according to any of the preceding claims, wherein the apparatus comprises at least two suction devices and the lift head is connected to the suction devices by at least two pipes that is connected at one end with the lift head and is connected at the opposite end of each pipe with one of the at least two suction devices.

7. An apparatus according to any of the preceding claims, wherein the at least one pipe includes at least one control valve, preferably the one or more control valves being connected with and controlled by a control device.

8. An apparatus according to any of the preceding claims, wherein the apparatus comprises one suction device and the lift head is connected to the suction devices by one pipe that is connected at one end with the lift head and at the opposite end with the suction device, and wherein the suction device is connected with air pressure via a second pipe and a control valve.

9. An apparatus according to any of the preceding claims, wherein the lift head comprises bellows to hold/grip the goods and/or in combination with the goods seal the suction chamber.

10. A method for operating an apparatus for handling layers of palletized goods comprising at least an upper layer and a lower layer, said apparatus including a lift head with a suction face for a pallet and comprising a downwardly open suction chamber which is connected via individual one-way valves to at least one suction device providing a suction flow with a volumetric flow rate providing an upward suction force below the suction face, said method comprising the steps of:
- providing a suction flow with a volumetric flow rate to the suction face;
- allowing the lift head to grab the upper layer of goods and hold the layer;
- lifting the layer of goods, until cleared from below by a sensor and/or a predetermined distance above the lower layer;
- adjusting the volumetric flow rate from a first value to a second value, when the sensor has detected that the layer is cleared and/or the predetermined distance is reached; and
- lifting the layer of goods to a desired position.

11. A method for operating an apparatus for handling layers of palletized goods, said apparatus including a lift head with a suction face for a pallet and comprising a downwardly open suction chamber which is connected via individual one-way valves to at least one suction device providing a suction flow with a volumetric flow rate providing an upward suction force below the suction face, said method comprising the steps of:
- providing a suction flow with a volumetric flow rate to the suction face;
- allowing the lift head to grab a layer of goods and hold the layer;
- checking if the hold is correct;
wherein the method comprises the further step
- if the hold is incorrect, rapidly adjusting the volumetric flow rate from a first value to a second value, to obtain a correct hold of the layer.

12. A method according to claim 10 or 11, wherein the method, in case of one or more cavities are present in the layer to be lifted, comprises the further step of increasing the volumetric flow rate from a first value to a second value, by one, two or more suction devices to ensure that all one-way valves over the one or more cavities are closed.

13. A method according to claim 10, 11 or 12, wherein the method compromises the steps of:
- positioning the suction face with a gap to the layer to be lifted with a predetermined distance, preferably said predetermined distance being about 40 mm to about a 100 mm.
- sealing the goods by bellows
- proving one set of a volumetric flow rate to the surface of the goods, providing the first lift:
- providing a secondary or more set of volumentric flow rates to provide a lift that forces the goods towards the surface of the suction face.

14. A method according to claims 10 to 13, wherein said method comprises the steps of:
- placing the lift head over a layer of palletized goods;
- providing a volumetric flow rate to the suction face;
- allowing the lift head to lift the layer of palletized goods;
- checking the lift is correct;
wherein the method comprises the further steps
- a. if the lift is deemed correct;
- lifting the layer of palletized goods to the desired position;
- b. if the lift is incorrect
- adjusting the volumetric flow rate from a first value to a second value, to obtain a correct lift;
- lifting the layer of palletized goods to the desired position.

15. A method according to claims 10 to 14, comprising the further steps of:
- monitoring the lift head by means of monitors and a control device to determine if a lift is correct or incorrect;
and in case of an incorrect lift;
- sending a signal from the control device to the one or more suction devices instructing to;
- adjust the volumetric flow rate from a first value to a second value, until the control system registers that a correct lift is obtained.

16. A method according to claims 10 to 15 comprising the further step of inflating inflatable bellows on the lift head so the bellows contact the rim of the layer of goods.

17. A method according to claims 10 to 16, wherein one or more control valves are used for adjusting the volumetric flow rate from a first value to a second value, preferably said one or more control valves being operated and controlled by a control device.

18. A method according to claims 10 to 17, wherein the apparatus is monitored by one or more sensors, preferably said one or more sensors communicating with a control device, preferable the one or more sensors being selected from a time of flight sensor, a light barrier sensor, a diffusion sensor, a radar, an ultrasonic sensor, or a camera.

19. A method according to claims 10 to 18, wherein the volumetric flow rate is adjusted from a first value to a second value, and if the lift head is about to drop the layer of goods, preferably the volumetric flow is increased.

20. A method according to claims 10 to 19, wherein the volumetric flow rate is adjusted from a first value to a second value, and if the lift head lifts goods from a layer below the layer to be lifted, preferably the volumetric flow is decreased.

21. A method according to claims 10 to 20, wherein the apparatus includes a first suction device and a second suction device, and where the first suction device is adapted for providing a suction flow with a volumetric flow rate to the suction face, and where the second suction device is adapted for increasing the volumetric flow rate at the suction face during a lift.
